(19) Europäisches Patentamt
European Patent Office
Office européen des brevets

(11) Veröffentlichungsnummer: **0 030 289**
**B1**

(12) # EUROPÄISCHE PATENTSCHRIFT

(45) Veröffentlichungstag der Patentschrift: **04.05.83**

(51) Int. Cl.³: **C 08 G 63/60,** C 08 G 63/20, C 08 G 63/48, C 09 D 3/64, C 09 D 3/68

(21) Anmeldenummer: **80107104.4**

(22) Anmeldetag: **15.11.80**

(54) **Beta-Hydroxibuttersäure-Polyester, Verfahren zu ihrer Herstellung und ihre Verwendung als Lackrohstoffe.**

(30) Priorität: **29.11.79 DE 2948023**

(43) Veröffentlichungstag der Anmeldung: **17.06.81 Patentblatt 81/24**

(45) Bekanntmachung des Hinweises auf die Patenterteilung: **04.05.83 Patentblatt 83/18**

(84) Benannte Vertragsstaaten: **DE FR GB IT NL**

(56) Entgegenhaltungen:
**DE-A-2 251 470**
**US-A-3 182 036**
**US-A-3 704 255**

(73) Patentinhaber: **BAYER AG, Zentralbereich Patente, Marken und Lizenzen, D-5090 Leverkusen 1, Bayerwerk (DE)**

(72) Erfinder: **Dhein, Rolf, Dr., Deswatinesstrasse 30, D-4150 Krefeld 1 (DE)**
Erfinder: **Reuter, Knud, Dr., Buschstrasse 149, D-4150 Krefeld (DE)**
Erfinder: **Rudolf, Hans, Dr., Haydnstrasse 9, D-4150 Krefeld 1 (DE)**
Erfinder: **Pfitzner, Jörg, Dr., Claudiusweg 3, D-5600 Wuppertal (DE)**

**EP 0 030 289 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# β-Hydroxibuttersäure-Polyester, Verfahren zu ihrer Herstellung und ihre Verwendung als Lackrohstoffe

Die Erfindung betrifft gesättigte und ungesättigte Polyester — gegebenenfalls auch mit ungesättigten Fettsäuren modifiziert (Alkylharze), die mindestens 20 Gew.-% β-Hydroxibuttersäurereste einkondensiert enthalten, ein Verfahren zur Herstellung dieser Polyester durch Umesterung von Poly-β-hydroxibuttersäure (PHB) und die Verwendung der Polyester als Lackrohstoffe.

Die Verwendung von Hydroxicarbonsäuren oder ihren Derivaten (Lactonen) zur Herstellung von Polyestern ist bekannt:

So werden Polyester von Lactonen, die mindestens 6 C-Atome pro Molekül enthalten, als Weichmacher für Vinylharze empfohlen und als Zwischenprodukte für die Herstellung von Elastomeren und Schäumen eingesetzt (US 3 169 945, 3 274 143).

Polyester, die Reste von Polyhydroxicarbonsäuren (z. B. von Polypropiolacton, Polycaprolacton) einkondensiert enthalten, sollen sich gemäß US 3 704 255 insbesondere als Dispergierhilfsmittel, aber auch in Kombination mit Polyisocyanaten, Polyglycidylverbindungen, Phenol-, Harnstoff- oder Melaminharzen als Überzugsmittel eignen. Aufgrund ihrer begrenzten Vernetzbarkeit genügen Härte und Lösungsmittelbeständigkeit solcher Überzüge nicht allen Anforderungen.

Aus der DE-OS 2 251 470 sind Polyester mit einkondensierten ε-Hydroxicapronsäureeinheiten bekannt; in Verbindung mit vernetzenden Harzen sollen sie zu flexiblen und harten Einbrennlackierungen führen. Die zur Polyesterherstellung bevorzugte Caprolactonmenge soll etwa 9—17% betragen, da offenbar geringere Mengen die gewünschte Elastizität nicht gewährleisten, höhere Mengen aber zu weiche Beschichtungen ergeben.

Andererseits werden in der US 3 140 267 Alkydharze beschrieben, in die ω-Lactone, z. B. Propiolacton, vorzugsweise in Mengen von 1 bis 7 Gew.-%, einkondensiert worden sind.

Als Polyester, der ausschließlich aus β-Hydroxicarbonsäure-Bausteinen aufgebaut ist, wurde auch die natürlich vorkommende PHB vorgeschlagen (US 4 138 291). Ihrer Verwendung als Lackrohstoff steht die begrenzte Löslichkeit in üblichen Lacklösungsmitteln entgegen; vgl. Angew. Chem. 74, 342 (1962); außerdem ist PHB sehr spröde und bedarf daher größerer Mengen Weichmacher (US 3 182 036). Schließlich liefert PHB glanzlose, opake Beschichtungen — Nachteile, die sich auch durch Molekulargewichtsaufbau unter Veresterungsbedingungen gemäß US 4 138 291 nicht beseitigen lassen.

Es war nun angesichts dieses Standes der Technik ausgesprochen überraschend, daß sich PHB chemisch zu Produkten modifizieren läßt, die sich zu transparenten, glänzenden, elastischen und harten Überzügen verarbeiten lassen und sich daher als neue Lackrohstoffe hervorragend eignen.

Gegenstand der Erfindung sind also — gesättigte und ungesättigte, ölfreie und öl-modifizierte — Polyester einer Hydroxylzahl von 50—400, vorzugsweise 100—350, mit einkondensierten β-Hydroxicarbonsäureeinheiten, dadurch gekennzeichnet, daß die Polyester 20—90, vorzugsweise 40,70, Gew.-% einkondensierte Einheiten der Formel

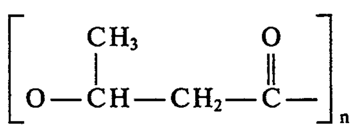

worin n im Mittel 1—15, vorzugsweise 3—9, bedeutet, und 80—10, vorzugsweise 60—30, Gew.-% einkondensierte Reste von Polyolen und/oder einwertigen Alkoholen, Mono- bzw. Polycarbonsäuren, Diisocyanaten enthalten.

Die zur Synthese der erfindungsgemäßen Polyester notwendigen β-Hydroxibuttersäureeinheiten können in Form von β-Butyrolacton oder PHB eingesetzt werden.

PHB kann mikrobiell gewonnen werden. Die Zahl der zur PHB-Synthese befähigten Mikroorganismen ist sehr groß; Übersicht s. Angew. Chem. 74, 342 (1962). Als Substrat für diese Mikroorganismen können z. B. Mono- und Dicarbonsäure enthaltende Abwässer aus der Caprolactam-Synthese, Kohlenhydrate wie z. B. Melasse, Methanol, Ethanol, Glycerin oder Kohlendioxid sein (US 4 138 291, Chem. Rundschau 30 (41), 14 (1977)).

Die Zugänglichkeit von PHB wird dadurch begünstigt, daß in der Mikrobenzellmasse bis zu 80 Gew.-%, bezogen auf Trockensubstanz, PHB eingelagert sein können und die Extraktion mittels cyclischer Carbonate wie Ethylen- oder Propylencarbonat (vgl. US 4 138 291) oder Chloroform keine Schwierigkeiten bereitet.

Das mittlere Molekulargewicht $\overline{M}_n$ der erfindungsgemäßen Polyester hängt von der Art dieser Polyester ab; es beträgt für ungesättigte Polyester, die zur radikalischen Copolymerisation mit ethylenisch ungesättigten Monomeren befähigt sind, 700 bis 5000, vorzugsweise 1000 bis 3000, für Alkylharze 1500 bis 10 000, vorzugsweise 2000 bis 5000 und für ölfreie gesättigte Polyester 400 bis 8000, vorzugsweise 500 bis 4000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch bestimmt in Aceton).

Unter Alkylharz und Polyestern versteht man durch Polykondensation nach bekannten Verfahren aus Alkoholen und Carbonsäuren hergestellten Polykondensate der Art, wie sie z. B. in Römpp's Chemielexikon, Bd. 1, S. 202, Franckh'sche Verlagsbuchhandlung, Stuttgart 1966 definiert oder bei D. H. Solomon, The Chemistry of Organic Filmformers, S. 75—101, John Wiley & Sons Inc., New York, 1967, beschrieben sind.

Neben den $\beta$-Hydroxibuttersäureeinheiten enthalten die erfindungsgemäßen Polyester vorzugsweise nur einkondensierte Reste von Polyolen, d. h. von aliphatischen, cycloaliphatischen und/oder araliphatischen Alkoholen mit 2—6 an nicht-aromatische C-Atome gebundenen OH-Gruppen und 2—24 C-Atomen pro Molekül, wie Glykole, z. B. Ethylenglykol, Propandiol-1,2, Propandiol-1,3, Butandiol-1,2, Butandiol-1,3, Butandiol-1,4, Butandiol-2,3, Pentandiol-1,5, Neopentylglykol, Hexandiol-1,6, Hexandiol-2,5, 2-Methyl-pentandiol-2,4, Pinakol, 2-Methyl-2-propyl-propandiol-1,3, 2,2-Diethylpropandiol-1,3, Octandiol, 2-Ethyl-hexandiol-1,3, 2,5-Dimethyl-hexandiol-2,5, 2,2,4-Trimethylpentadiol, Trimethylhexandiol-1,6, Octan-diol-1,2, Cyclohexandiol-1,2, Cyclohexandiol-1,3, Cyclohexandiol-1,4, 2,2,4,4-Tetramethylcyclobutandiol-1,3, 1,4-Bis-(hydroxymethyl)-cyclohexan, 4,4'-(2-Methylpentan-2,4-diyl)-biscyclohexanol, 1,3-Phenylen-bis(1,1-dimethylmethanol), 1,4-Phenylen-bis(1,1-dimethylmethanol), perhydriertes 2,2-Bis-(4-hydroxyphenyl)-propan.

Die Polyole können auch —O—, —S— oder $—SO_2—$ als Ketten- oder Ringglieder - einmal oder mehrmals — enthalten. Bevorzugte Beispiele solcher Heteroverbindungen sind Diethylenglykol, Triethylenglykol, Tetraethylenglykol, Dipropylenglykol, Tripropylenglykol, Thiodiglykol, 2,2-Bis-(4-(2-hydroxiethoxi)-phenyl)-propan, perhydriertes 2,2-Bis-(4-(2-hydroxiethoxi)-phenyl)-propan, 4,4'-Bis-(2-hydroxiethoxy)-diphenylsulfid, 4,4'-Bis-(2-hydroxiethoxi)-diphenylsulfon, 1,1-Bis-(4-(2-hydroxiethoxi)-phenyl)-ethan, 1,1-Bis-(4-(2-hydroxiethoxi)-phenyl)-cyclohexan, Bis-(4-(2-hydroxiethoxi)-phenyl)-methan, 1,5-Bis-(2-hydroxiethoxy)-naphthalin.

Bevorzugte Polyole sind ferner Alkohole mit 3—6 OH-Gruppen einschließlich die entsprechenden Heteroverbindungen, wie z. B. Glycerin, Trimethylolethan, Trimethylolpropan, 1,2,6-Hexantriol, Erythrit, Pentaerythrit, Xylit, Sorbit, Mannit, 1,3,5-Cyclohexantriol, oxethyliertes Trimethylolethan, oxethyliertes Trimethylolpropan, oxethylierte Hexite, z. B. oxyethylierter Xylit, Sorbit oder Mannit sowie allgemein oxethylierte Polyalkohole mit 3—6 Hydroxylgruppen, oxethylierte Trisphenole.

Besonders geeignete Polyole sind Ethylenglykol, Propandiol-1,2, Neopentylglykol, Hexandiol-1,6, Diethylenglykol, Glycerin, Trimethylolethan, Trimethylolpropan, Pentaerythrit.

Die bevorzugten erfindungsgemäßen Polyester können beispielsweise aus PHB und Polyolen unter Umesterungsbedingungen synthetisiert werden.

Die Umesterung wird bevorzugt in Gegenwart eines nicht protonsauren Umesterungskatalysators aus der Gruppe der Phosphorigsäureester, Orthotitansäureester bzw. verwandter Verbindungen des Titans oder Zinnverbindungen durchgeführt. Besonders geeignet sind Organozinnverbindungen aus der Gruppe der Dialkylzinnoxide, wie z. B. Dibutylzinnoxid, und der Gruppe der Dialkylzinndicarboxylate, wie z. B. Dibutylzinndioctoat, Dibutylzinndilaurat. Der Umesterungskatalysator kann in Mengen von 0,001 bis 2, vorzugsweise 0,05 bis 1 Gew.-%, bezogen auf Reaktionsmischung, eingesetzt werden.

Da PHB in der Hitze zu Abbaureaktionen, insbesondere zu Crotonsäure neigt (Nature 191, 463 (1961), US 2 361 036), ist es wichtig, bei der Herstellung der erfindungsgemäßen Polyester den Temperaturbedingungen besondere Beachtung zu schenken, da in manchen Fällen eine Temperaturabweichung von 5° den Erfolg der Reaktion bereits in Frage stellen kann. Geeignete Reaktionstemperaturen für die Umesterung von PHB mit Polyolen liegen in der Regel in der Nähe des Schmelzpunkts der PHB, etwa bei 150—190° C, vorzugsweise 160—170° C.

Neben Polyolen können den erfindungsgemäßen Polyestern auch aliphatische, cycloaliphatische und aromatische mehrbasische Carbonsäuren, vorzugsweise Di-, Tri- und Tetracarbonsäuren, mit 4—12 C-Atomen pro Molekül oder deren veresterungsfähige Derivate (z. B. Anhydride oder Ester niederer Alkohole mit 1—4 C-Atomen), wie z. B. Phthalsäure, Isophthalsäure, Terephthalsäure, Tetrahydrophthalsäure, Hexahydrophthalsäure, Hexahydroisophthalsäure, Hexahydroterephthalsäure, Methyltetrahydrophthalsäure, Endomethylentetrahydrophthalsäure, Glutarsäure, Bernsteinsäure, Adipinsäure, Trimellithsäure, Pyromellithsäure und deren veresterungsfähige Derivate eingesetzt werden. Besonders geeignet sind Phthalsäureanhydrid und Adipinsäure. Wird PHB mit Polyolen und mehrbasischen Carbonsäuren umgeestert, so richtet sich das Polyol/Polycarbonsäure-Verhältnis nach der gewünschten Hydroxylzahl der erfindungsgemäßen Polyester.

Weiterhin können die erfindungsgemäßen Polyester mit einwertigen aliphatischen, cycloaliphatischen oder araliphatischen Alkoholen mit 1—18 C-Atomen, z. B. Benzylalkohol, Hexahydrobenzylalkohol, 2-Ethylhexanol, oder mit aliphatischen, cycloaliphatischen oder aromatischen Monocarbonsäuren mit 2—24 C-Atomen, wie z. B. Benzoesäure, p-tert.-Butylbenzoesäure, Hexahydrobenzoesäure, modifiziert werden.

Um Alkydharze zu erhalten, können ungesättigte Fettsäuren (oder die entsprechenden Ester) einkondensiert werden. Bevorzugte Fettsäuren sind Sojaölfettsäure, Leinölfettsäure, Ricinenfettsäure, Baumwollsaatölfettsäure, Safflorölfettsäure, Erdnußölfettsäure; auch die daraus mit Isomerisierungskatalysatoren hergestellten Fettsäuren bzw. Fettsäuregemische können verwendet werden. Zur Einkondensation dieser Fettsäuren können die freien Fettsäuren oder die in bekannter Weise durch Umesterung der natürlichen Öle mit Glycerin oder anderen Polyalkoholen wie Trimethylolethan,

Trimethylolpropan hergestellten hydroxyfunktionellen Fettsäureester Verwendung finden. Die Einbindung der Fettsäureester in den Polyester ist auch in dem Fachmann geläufiger Weise über Diisocyanate, wie z. B. Toluylendiisocyanat oder Isophorondiisocyanat, möglich.

Besonders problemlos lassen sich erfindungsgemäße Polyester aus PHB, Polyolen und Polycarbonsäuren (bzw. deren Drivaten) nach einem Verfahren herstellen, wonach man im ersten Reaktionsschritt PHB mit der Polyolkomponente umestert und das gebildete Polyester-Polyol im zweiten Schritt mit der Dicarbonsäure (oder deren Derivat) verestert.

Anstelle der Dicarbonsäuren oder ihrer Derivate können zum weiteren Aufbau des Polyesters aus den im ersten Reaktionsschritt hergestellten Polyester-Polyolen auch in bekannter Weise Polyisocyanate, vorzugsweise Diisocyanate mit 4—12 C-Atomen, wie z. B. Toluylendiisocyanat, Hexamethylendiisocyanat, Isophorondiisocyanat, verwendet werden.

Über die unvollständige Einesterung drei- oder mehrwertiger Carbonsäuren oder die nachträgliche Halbesterbildung mit Dicarbonsäureanhydriden wie Phthalsäureanhydrid oder Tetrahydrophthalsäureanhydrid ist es dem Fachmann ohne weiteres möglich, durch Neutralisation der freien COOH-Gruppen mit Ammoniak oder Aminen in Gegenwart organischer Hilfslöser wasserverdünnbare Harze zu erhalten.

Vernetzung der erfindungsgemäßen Polyester aus PHB kann mit Aminoplastharzen, wie Harnstoffharzen, Guanaminharzen oder Melaminharzen erfolgen. Bevorzugt werden Melaminharze, deren Methylolgruppen ganz oder teilweise mit einwertigen Alkoholen mit 1—4 Kohlenstoffatomen, wie Methanol, Butanol, Isobutanol, verethert sind. Geeignete Härtungsbedingungen sind z. B. 30 min/120° C, wobei bei Verwendung von Melaminharzen von Hexamethoximethylmelamin-Typ ein saurer Katalysator, beispielsweise p-Toluolsulfonsäure, zugesetzt werden kann.

Ebenso können die erfindungsgemäßen Polyester aus PHB mit Polyisocyanaten oder Polyisocyanat-Abspaltern gehärtet werden. Gebräuchliche Polyisocyanate sind z. B. die Additionsprodukte von Toluylendiisocyanat an mehrwertige Alkohole wie Trimethylolpropan, über Isocyanuratgruppen praepolymerisierte Diisocyanate aus Toluylendiisocyanat, Hexamethylendiisocyanat, Isophorondiisocyanat oder Gemischen davon, über Biuretgruppen vorkondensierte Produkte, z. B. aus Hexamethylendiisocyanat. Die Härtungsbedingungen unterscheiden sich von den von herkömmlichen Systemen gewohnten nicht; eine Härtung bei Raumtemperatur ist ebenso möglich wie die insbesondere von aliphatischen Polyisocyanaten enthaltenden Systemen gewohnte forcierte Trocknung bei erhöhter Temperatur, z. B. 80° C. Die gesättigten, aliphatischen, cycloaliphatischen oder aromatischen Dicarbonsäuren in den erfindungsgemäßen Polyestern können auch ganz oder teilweise durch olefinisch ungesättigte Dicarbonsäuren ersetzt werden. Solche Dicarbonsäuren bzw. zur Einkondensation geeignete Derivate sind z. B. Fumarsäure, Maleinsäureanhydrid, Itaconsäure, Citraconsäure, Mesaconsäure, Dichlormaleinsäure(anhydrid), insbesondere Fumarsäure und Maleinsäureanhydrid.

Man erhält somit ungesättigte Polyester, die in copolymerisierbaren Monomeren gelöst werden und unter Zusatz der üblichen peroxidischen Initiatoren, insbesondere Ketonperoxiden oder Cumolhydroperoxid und Metallbeschleunigern, insbesondere Cobalt-II-carboxylaten, sowie gegebenenfalls Paraffinen oder Wachsen als Laminate in den für ungesättigte Polyesterharze üblichen Schichtdicken, z. B. 60—500 µm, bei Raumtemperatur oder bei erhöhter Temperatur, z. B. 40—80° C gehärtet werden können. Bevorzugte copolymerisierbare Monomere sind z. B. Styrol, Vinyltoluol, Divinylbenzol, Methacrylsäureester, Vinylacetat, Diallylphthalat, Diallylfumarat.

Weiterhin können den erfindungsgemäßen Polyestern, Alkohole, die Allyl- oder Benzyletherfunktionen enthalten (vgl. DE-AS 1 024 654) wie z. B. Glycerinmonoallylether, Glycerindiallylether, Trimethylolpropanmonoallylether, Trimethylolpropandiallylether, Pentaerythrittriallylether, Trimethylolpropandibenzylether, einkondensiert werden.

Auf diese Weise kann bekanntlich die Sauerstoffinhibierung der Oberflächenhärtung verhindert werden.

Die erfindungsgemäßen Alkydharze aus PHB können in den für Alkydharze gebräuchlichen Ölgehalten, also kurz-, mittel- und langölig, hergestellt werden und trocknen in dünnen Filmen an der Luft zu klebfreien Beschichtungen in Gegenwart der üblichen Metall-Sikkative aus der Gruppe der Co-, Pb-, Mn-, ca-, Fe-Salze wie Octoate, Naphthenate. Die für kurz- und mittelölige Harze gebräuchliche Ofentrocknung ist ebenfalls möglich, ebenso die Kombination mit Aminoplastharzen, insbesondere Melaminharzen, in den üblichen Gewichtsverhältnissen Alkyd-/Melaminharze zwischen 10 : 1 und 1 : 1, bevorzugt 8 : 2 bis 6 : 4 (jeweils Gewichtsteile Festharz) zu ofentrocknenden Beschichtungen.

Besonders bevorzugt sind PHB-Alkydharze, die zweistufig hergestellt werden, wobei in der ersten Stufe PHB mit Dialkoholen, Polyalkoholen oder/und gegebenenfalls im Mittel di- oder mehrfach hydroxyfunktionellen Polyalkohol-Fettsäureestern der ungesättigten, trocknenden Fettsäuren umgeestert wird, anschließend die Polyesterbausteine mit Dicarbonsäure(anhydride)n und/oder Diisocyanaten zum fertigen Harz verlängert und gegebenenfalls weitere Monocarbonsäuren einkondensiert werden, wobei auch der Einbau der ungesättigten Fettsäuren oder deren hydroxyfunktioneller Ester und gegebenenfalls weiterer Monocarbonsäuren in der zweiten Stufe erfolgen kann.

Die erfindungsgemäßen Polyester können als Lackrohstoffe verwendet werden.

Die Gew.-%-Angaben von Seite 3 beziehen sich jeweils auf die erfindungsgemäßen Polyester.

## Beispiele

Die in den folgenden Beispielen genannten Teile sind stets Gewichtsteile, Prozentangaben bedeuten Gewichtsprozente.

### Beispiel 1

103 Teile PHB, 32 Teile Trimethylolpropan und 1,35 Teile Dibutylzinnoxid werden aufgeschmolzen und bei 160°C gerührt, bis eine Probe in jedem Verhältnis mit Ethylglykolacetat (EGA) mischbar ist. Man erhält ein viskoses Harz mit folgenden Kennzahlen: Säurezahl 13, Hydroxyzahl 305 (theor. 298), Viskosität 93 mPa · s (70%ig in EGA). Das Polyester-Polyol wird 50%ig in EGA gelöst; mit Polyisocyanat werden Klarlacke hergestellt und auf Glasplatten ausgestrichen. Weitere Angaben und Filmeigenschaften sind der Tabelle zu entnehmen.

Das gleiche Polyester-Polyol ergibt im Gemisch mit einem butylierten Melamin-Formaldehydharz, z. B. im Gewichtsverhältnis 6 : 4, jeweils bezogen auf Festharz, klebfreie, glänzende Einbrennbeschichtungen (130°C, Klarlacke mit 50 µm Trockenfilmschichtdicke auf Glas).

Das gleiche Polyester-Polyol ergibt mit Hexamethoximethylmelamin, z. B. im Gewichtsverhältnis 65 : 35, jeweils bezogen auf Festharz, und 1,0% p-Toluolsulfonsäure, bezogen auf das Gesamt-Bindemittelgewicht, nach 15 Min. bei 120°C klebfreie und kratzfeste Beschichtungen (Klarlack mit 70 µm Trockenfilmschichtdicke auf Glas).

### Beispiel 2

103 Teile PHB, 32 Teile Pentaerythrit und 1,35 Teile Dibutylzinnoxid werden entsprechend Beispiel 1 umgesetzt, bis Mischbarkeit mit EGA in jedem Verhältnis gegeben ist. Man erhält ein viskoses Harz mit folgenden Kennzahlen: Säurezahl 14, Hydroxyzahl 397 (theor. 398), Viskosität 103 mPa · s (70%ig in EGA). Das Polyester-Polyol wird 50%ig in EGA gelöst, mit Polyisocyanat werden Klarlacke hergestellt und auf Glasplatten ausgestrichen. Weitere Angaben und Filmeigenschaften sind der Tabelle zu entnehmen.

### Beispiel 3

86 Teile PHB, 46 Teile Trimethylolpropan und 1,1 Teile Dibutylzinnoxid werden aufgeschmolzen und 24 h bei 160°C gerührt. Dann werden 22 Teile Phthalsäureanhydrid zugegeben und das Reaktionsgemisch auf 185°C erhitzt, bis 3,2 Teile Wasser abgeschieden sind (99% der theor. Menge).

Geringe Mengen leichter flüchtiger Bestandteile werden im Wasserstrahlvakuum bei 150°C abgezogen. Man erhält ein gelbliches bis hellbraunes, viskoses Harz mit Säurezahl 10 und Viskosität 1600 mPa · s (70%ig in EGA). Im Gemisch mit einem butylierten Melamin-Formaldehyd-Harz, z. B. im Gewichtsverhältnis 7 : 3, jeweils bezogen auf Festharz, erhält man klebfreie, glänzende Einbrennlackierungen (130°C, Klarlacke mit 50 µm Trockenfilmschichtdicke auf Glas).

Tabelle

Filmeigenschaften von Zweikomponenten-Lacksystemen entsprechend den Beispielen 1 und 2

| Polyester aus Beispiel | Polyiso-cyanat | Verhältnis NCO/OH | Trockenfilm-schichtdicke [nm] | Trocknungs-bedingungen*) [°C; h] | Pendelhärten nach König [sec] |
|---|---|---|---|---|---|
| 1 | A | 1 | 70 | 23; 8/23; 72 | 42/160 |
| 1 | A | 1,25 | 70 | 23; 8/23; 72 | 46/166 |
| 2 | A | 1 | 70 | 23; 8/23; 72 | 63/174 |
| 2 | A | 1,25 | 70 | 23; 8/23; 72 | 62/184 |
| 1 | B | 1 | 60 | 23; 2/23; 24 | 115/156 |
| 1 | B | 0,7 | 60 | 23; 2/23; 24 | 82/128 |
| 2 | B | 1 | 60 | 23; 2/23; 24 | 137/162 |
| 1 | C | 1 | 70 | 80; 1/2 + 23; 4 | 129 |
| 2 | C | 1 | 70 | 80; 1/2 + 23; 4 | 105 |

*) Bis zur Bestimmung der Pendelhärte.

Erklärung:

Polyisocyanat A war eine 67%ige Lösung (NCO-Gehalt 11,5%) in EGA/Xylol (Gewichtsverhältnis 1 : 1) eines Additionsprodukts aus Toluylendiisocyanat und Trimethylolpropan;
Polyisocyanat B war eine 51%ige Lösung (NCO-Gehalt 8%) in Butylacetat eines Polyisocyanurat-Präpolymeren aus Toluylendiisocyanat;
Polyisocyanat C war eine 75%ige Lösung (NCO-Gehalt 16,5%) in EGA-Xylol (Gewichtsverhältnis 1 : 1) eines Biuretgruppen-haltigen Polyisocyanats aus Hexamethylendiisocyanat und Wasser.

**Patentansprüche**

1. Polyester einer Hydroxylzahl von 50—400 mit einkondensierten β-Hydroxicarbonsäureeinheiten, dadurch gekennzeichnet, daß die Polyester 20—90 Gew.-% einkondensierte Einheiten der Formel

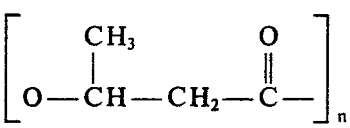

worin n im Mittel 1—15 bedeutet, und 80—10 Gew.-% einkondensierte Reste von Polyolen und gegebenenfalls einwertigen Alkoholen, Mono- bzw. Polycarbonsäuren, Diisocyanaten, enthalten.

2. Polyester nach Anspruch 1, dadurch gekennzeichnet, daß sie eine Hydroxylzahl von 100—350 besitzen.

3. Polyester nach Ansprüchen 1—2, dadurch gekennzeichnet, daß sie 40—70 Gew.-% einkondensierte Einheiten der Formel

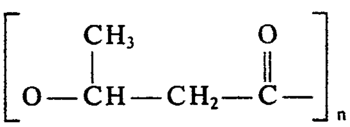

und 60—30 Gew.-% einkondensierte Reste von Polyolen und/oder einwertigen Alkoholen, Mono- bzw. Polycarbonsäuren, Diisocyanaten, enthalten.

4. Polyester nach Ansprüchen 1—3, dadurch gekennzeichnet, daß n im Mittel 3—9 bedeutet.

5. Verfahren zur Herstellung der Polyester nach Ansprüchen 1—4, dadurch gekennzeichnet, daß man Poly-β-hydroxibuttersäure und Polyole und gegebenenfalls einwertige Alkohole, Mono- bzw.

Polycarbonsäuren, Diisocyanate, bei 150—190° C miteinander umestert.

6. Verfahren nach Anspruch 5, dadurch gekennzeichnet, daß man in der ersten Reaktionsstufe Poly-β-hydroxibuttersäure mit Polyalkohol umestert und anschließend die erhaltene Reaktionsmischung mit Mono- bzw. Polycarbonsäuren, Diisocyanaten und/oder einwertigen Alkoholen verestert.

7. Verwendung der Polyester nach Ansprüchen 1—4 als Lackrohstoffe.

## Claims

1. Polyesters having a hydroxyl number of 60—400 and containing co-condensed β-hydroxycarboxylic acid units, characterised in that the polyesters contain 20—90% by weight of co-condensed units of the formula

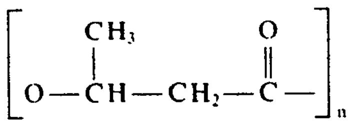

wherein n has an average value of 1—15, and 80—10% by weight of co-condensed residues of polyols and optionally monohydric alcohols, mono- or polycarboxylic acids and diisocyanates.

2. Polyesters according to claim 1, characterised in that they have a hydroxyl number of 100—350.

3. Polyesters according to claims 1—2, characterised in that they contain 40—70% by weight of co-condensed units of the formula

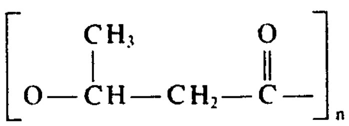

and 60—30% by weight of co-condensed residues of polyols and/or monohydric alcohols, mono- or poly-carboxylic acids and diisocyanates.

4. Polyesters according to claims 1—3, characterised in that n has an average value of 3—9.

5. A process for producing the polyesters according to claims 1—4, characterised in that poly-β-hydroxybutyric acid and polyols and optionally monohydric alcohols, mono- or poly-carboxylic acids and diisocyanates are transesterified with one another at 150—190° C.

6. A process according to claim 5, characterised in that, in the first stage of the reaction, poly-β-hydroxybutyric acid is transesterified with polyalcohol after which the reaction mixture obtained is esterified with mono- or poly-carboxylic acids, diisocyanates and/or monohydric alcohols.

7. The use of the polyesters according to claims 1—4 as starting materials for lacquers.

## Revendications

1. Polyesters d'indice d'hydroxyle égal à 50—400 présentant des motifs acide β-hydroxycarboxylique incorporés par condensation, caractérisés en ce qu'ils contiennent 20—90% en poids de motifs incorporés par condensation de formule

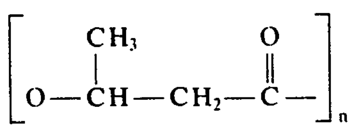

dans laquelle n a une valeur moyenne de 1—15, et 80 à 100% en poids de restes, incorporés par condensation, de polyols et, le cas échéant, d'alcools monovalents, d'acides mono- ou polycarboxyliques, de diisocyanates.

2. Polyesters suivant la revendication 1, caractérisés en ce qu'ils ont un indice d'hydroxyle de 100—350.

3. Polyesters suivant les revendications 1—2, caractérisés en ce qu'ils contiennent 40—70% en poids de motifs incorporés par condensation de formule

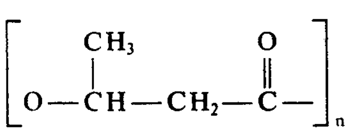

et 60—30% en poids de restes, incorporés par condensation, de polyols et/ou d'alcools monovalents, d'acides mono- ou Polycarboxyliques, de diisocyanates.

4. Polyesters suivant les revendications 1—3, caractérisés en ce que n a en moyenne une valeur de 3—9.

5. Procédé de production des polyesters suivant les revendications 1—4, caractérisé en ce qu'on transestérifie ensemble à 150—190°C l'acide poly-β-hydroxybutyrique et des polyols et, le cas échéant, des alcools monovalents, des acides mono- ou polycarboxyliques, des diisocyanates.

6. Procédé suivant la revendication 5, caractérisé en ce qu'on transestérifie dans la première étape de réaction un acide poly-β-hydroxybutyrique avec un polyalcool, puis on estérifie le mélange réactionnel obtenu avec des acides mono- ou polycarboxyliques, des diisocyanates et/ou des alcools monovalents.

7. Utilisation des polyesters suivant les revendications 1—4 comme matières premières pour laques.